# EUROPEAN PATENT SPECIFICATION

(11) **EP 1 274 512 B1**
(45) Date of publication and mention of the grant of the patent: **19.10.2005**
(21) Application number: 01923995.3
(22) Date of filing: 18.04.2001
(51) Int. Cl.: B03B 5/00, B01D 11/02, E02F 3/88

(54) **METHOD AND INSTALLATION FOR DESALINATING SAND AND SUCTION HOPPER COMPRISING SUCH AN INSTALLATION**
VERFAHREN UND ANLAGE ZUR SANDENTSALZUNG UND EINE SOLCHE ANLAGE ENTHALTENDER SAUGBAGGER
PROCEDE ET INSTALLATION DE DESSALAGE DE SABLE ET TREMIE D'ASPIRATION COMPRENANT CETTE INSTALLATION

(30) Priority: 18.04.2000 NL 1014973
(43) Date of publication of application: 15.01.2003
(73) Proprietor: Van Oord N.V., 3067 GG Rotterdam (NL)
(72) Inventor: MULLIE, Anthony, NL-2111 WH Aerdenhout (NL); VLAK, Jan, NL-2924 AR Krimpen Aan den IJssel (NL); OOSTINGA, Hans, NL-3055 EH Rotterdam (NL)
(74) Representative: van Westenbrugge, Andries
(86) International application number: PCT/NL2001/000307
(87) International publication number: WO 2001/078900

(56) References cited:
- GB-A- 1 229 059
- GB-A- 2 047 669
- PATENT ABSTRACTS OF JAPAN vol. 1999, no. 02, 26 February 1999 (1999-02-26) & JP 10 296120 A (ASTEC IRIE:KK;NISHI NIPPON SHIGEN KIYOUHAN KK), 10 November 1998 (1998-11-10)

## Description

The invention is related to a suction hopper as defined in the pre-characterizing portion of claim 1.

Such a suction hopper is disclosed in GB-A-2 047 669.

The desalination of sand is a primary precondition if sea sand is to be able to be used on land. The requirement imposed is that the sand must have a salt content that is less than 200 mg/kg solids.

Despite the problems associated with the desalination of sand, it can be attractive for various reasons to extract sea sand. One important reason mentioned is the lack of economically extractable sand on the mainland itself. Especially in the case of certain large projects, such as the construction of infrastructure or the construction of residential or industrial areas, the demand for sand is high.

The problem in using sea sand on the mainland is that the salt water present in the pores between the sand grains is difficult to remove. As a consequence of adhesion, too large a quantity of salt water remains behind in the parcel of sand, even after dewatering has taken place for some time.

A known method for desalination is first of all to remove the salt-containing water from the extracted sand mixture by means of suction and then to feed freshwater from below in order to make the salt water that is still adhering around the sand grains fresher. This process requires large quantities of freshwater because making the said adhering water fresher proceeds with difficulty. No desalination occurs at locations where there are air inclusions. Moreover, air inclusions severely impede the flow of the water.

GB 1 229 059 discloses a method for desalinating sand with which wet sea sand is loaded into a container (such as a bin). This means that, as is customary, the water in this sand is as far as possible drained off during loading, via an overflow or other discharge means. The wet sand contains adhering salt water and air. The salt content in the adhering water becomes higher, depending on the evaporation time. Salt water with an increasing salt content dissolves with increasingly greater difficulty in freshwater or water containing less salt. Thereafter, for treatment of the mixture, the residual salt water is extracted whilst at the same time freshwater is sprayed onto the sand mixture. As a result of the air in the pores between the sand grains, the freshwater flows with great difficulty over the adhering salt water through the pores, during which operation air can be entrained and the adhering salt water barely dissolves. The low salt contents currently demanded cannot be achieved using this method.

In relation to the salination of agricultural and horticultural areas alongside the river and the use of river water as drinking water, water authorities currently set the maximum salt content for water discharged into the river very low. The discharge of salt or brackish water into the river is therefore also usually prohibited, with the result that this water has to be discharged into the sea or into the tidal region of the river. Desalination of sea sand with freshwater has consequently become an expensive method.

The aim of the invention is to provide a suction hopper by means of which sea sand can be desalinated in an economically justifiable manner. Said aim is achieved in that the means for generating a vacuum in each discharge line comprise a pressure tank and a discharge pump that is connected to a discharge line, as well as a vacuum tank that is connected to the pressure tank in order to generate a vacuum therein, wherein the pressure tank is in the bin.

The salt pore water can be replaced by fresh pore water without the adhesion forces (mainly electrostatic physical bonds between sand grain and water molecules) between water and sand grains coming into play. Complete replacement of the salt water by the freshwater takes place, there being no change in the structure of the grain skeleton and desalination being able to proceed gradually without major effort.

It is found that the transition between freshwater and salt water is very sharp. This transition also remains sharp when this level falls in the parcel of sand. Because of the laminar nature of the water flow there is virtually no exchange of dissolved substances between freshwater and salt water. As a result only a relatively shallow layer of freshwater is needed: for example, a quantity of 500 cubic metres freshwater suffices for a container with a capacity of 8000 cubic metres. Thus, the quantity of freshwater is small. For suction hoppers, for example, this provides a good economic option for taking such a small quantity of freshwater to the site of extraction of the sand, after which the extracted sand can be desalinated during the journey to the discharge location, without additional travelling time and with little loss of loading capacity.

It is possible to continue extracting the salt pore water and causing fresh pore water to penetrate in such a way that the pores in at least the upper portion of the parcel of sand become filled with air.

By means of salt meters, which measure the salt content of the water to be extracted or the water extracted, in or in the vicinity of the suction installation, it is possible to recycle the major proportion of the freshwater back into a freshwater tank, after which it can be re-used.

Preferably, the mixture consisting of sand and salt water, as well as the layer of freshwater, is placed in a bin which has perforated discharge pipes located at various levels, applying a vacuum in the discharge pipes, and stopping discharging water from a discharge pipe as soon as the level of salt pore water has fallen to the level of that discharge pipe.

The container can have a trough-shaped base, provided with a series of discharge pipes.

Depending on the level of the interface between the salt pore water and the fresh pore water, one or more discharge pipes are shut off in succession. Extraction then takes place only through those discharge pipes which are located below said interface.

The presence of fresh or salt pore water can be established by providing salt meters on or in the vicinity of the discharge pipes, which meters measure the salt content of the water.

The discharge pump and the requisite shut-off valve are accommodated in the pressure tank such that they are protected, which makes the installation concerned suitable, for use in a suction hopper.

The invention will be explained in more detail below with reference to an illustrative embodiment shown in the figures.
Figure 1 shows a plan view of the bin of a suction hopper according to the invention;
Figure 2 shows a cross-section through the bin according to Figure 1;
Figures 3 - 5 show various stages in desalinating a parcel of sand in the bin according to Figures 1 and 2.

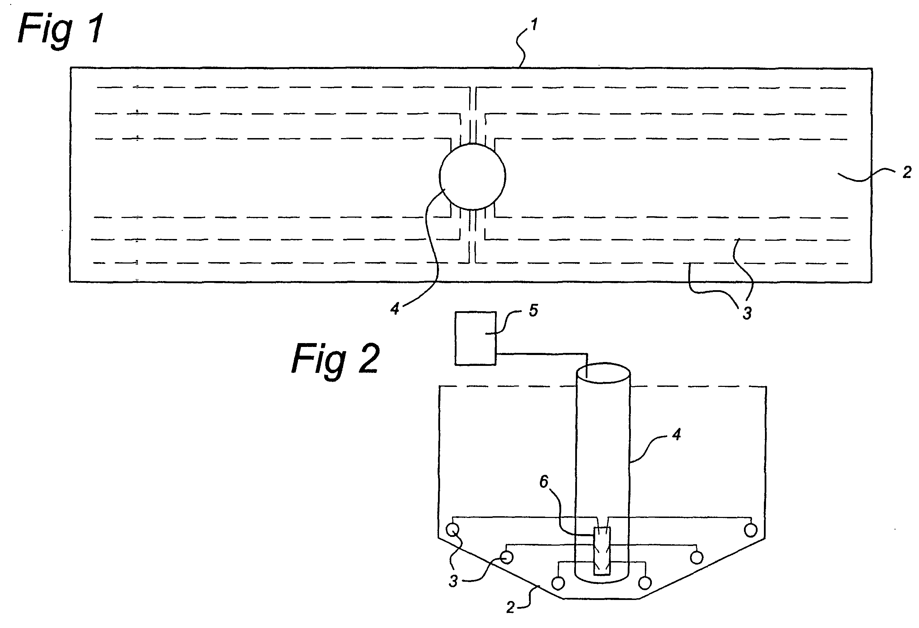

The bin 1 of a suction hopper (not shown in more detail) shown in Figure 1 has a trough-shaped base 2 on which a number of discharge pipes 3 according to the invention have been fitted. These discharge pipes 3 are a short distance above the base and in view of the trough-shaped form of the latter are at different levels.

The discharge pipes 3 are each connected to a pressure tank 4 which, on the one hand, is connected to a vacuum tank 5 for maintaining a vacuum in the pressure tank 4 and, on the other hand, is connected to a discharge pump 6 for discharging the salt water extracted via the perforated discharge pipes 3.

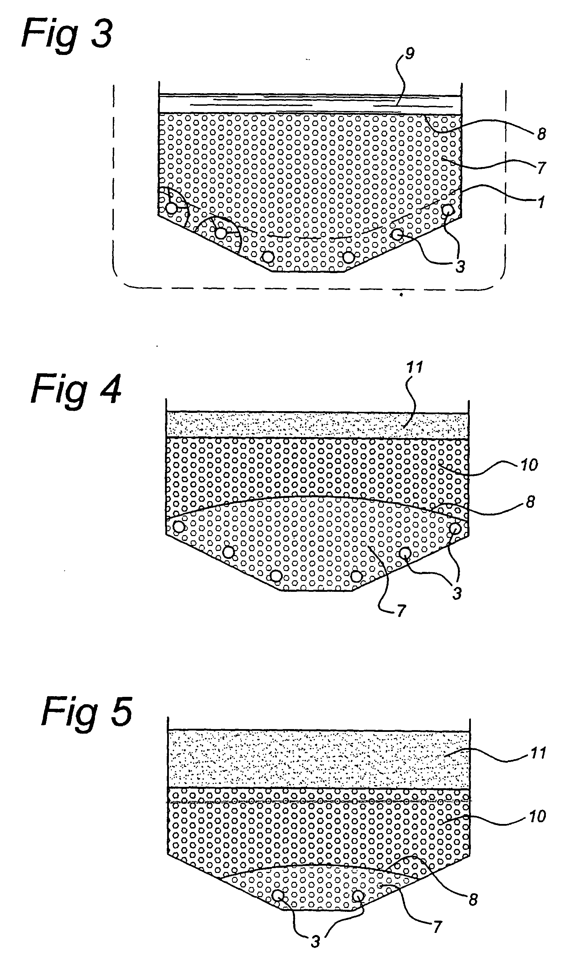

When carrying out the method for desalinating a mixture of sand and salt water according to the invention the procedure is as shown in Figures 3 - 5. The bin is first filled with a mixture 7 of sand, where the pores are completely filled with salt pore water. The level of the salt pore water is indicated by 8. There is no further layer of salt water on top of the mixture. In order to prevent air inclusions, the sand must be saturated with salt water up to the top surface.

According to the invention, a layer of freshwater 9 is now introduced on top of the mixture of sand and salt water 7. Water is then removed in the discharge pipes 3, by generating a vacuum, as a result of which salt water is extracted from the mixture and the level 8 falls. The water is removed in a controlled manner, account being taken of the maximum flow rate of the water through the pores.

However, since there is a quantity of freshwater 9 on top of the mixture, this freshwater replaces the salt pore water as soon as the level 8 falls. As shown in Figure 4, as this level falls a mixture of sand and fresh pore water 10 forms in the top of the bin. Sand containing salt pore water 7 is still present below the level 8.

As soon as the level 8 has fallen to the height of the highest discharge pipes 3 these discharge pipes 3 are shut off. The presence of salt or fresh pore water can be detected by salt meters, which measure the salt content and are known per se and not shown in more detail.

Extraction of salt pore water is continued through those discharge pipes 3 which are still below the level 8, the situation shown in Figure 5 finally being obtained. Level 8 is kept horizontal as far as possible at the start of the extraction process.

Preferably, the water is removed in such a way that when level 8 is in its lowest position it is as far as possible equidistant from the individual discharge pipes 3. In the interim, a layer of sand 11 in which the pores contain air, and a small quantity of adhering freshwater, has formed above the sand containing fresh pore water 10.

The sand 11 which has pores filled with air and the sand 10 in which the pores are filled with freshwater can be used for application on the mainland.

It is also possible subsequently to extract the freshwater and to store this in a separate tank for re-use.

## Claims

1. Suction hopper, comprising an installation for desalinating a mixture (7) consisting of sand and salt water or sand and brackish water, said suction hopper further comprising:
- a container (1) with at least one perforated discharge pipe (3) located close to the base (2) thereof,
- means (4-6) for discharging water by generating a vacuum in each discharge pipe (3), said means comprising a discharge pump (6) for discharging water from each of said discharge pipes (3), and
- means for feeding a layer of freshwater (9) onto the mixture (7),
**characterised in that** the means (4-6) for generating a vacuum in each discharge pipe (3) further comprise a pressure tank (4) that is connected to a discharge pipie (3), as well as a vacuum tank (5) that is connected to the pressure tank (4) in order to generate a vacuum therein, wherein the pressure tank is in the container.

2. Suction hopper according to Claim 1, wherein the bin (1) has a trough-shaped tapering base (2) with discharge pipes (3) that are at different heights.

3. Suction hopper according to Claim 1 or 2, wherein at least one of the discharge pipes (2) is provided with a salt meter.

## Patentansprüche

1. Saugbagger, umfassend eine Anlage zur Entsalzung eines Gemisches (7), welches aus Sand und Salzwasser oder aus Sand und Brackwasser besteht, wobei der Saugbagger des Weiteren umfasst:
- einen Behälter (1) mit mindestens einem perforierten Auslassrohr (3), welches nahe an dessen Basis (2) angeordnet ist,
- Mittel (4-6), um Wasser durch Erzeugen eines Vakuums in jedem Auslassrohr (3) auszuleiten, wobei die Mittel eine Auslasspumpe (6) umfassen, um Wasser aus jedem der Auslassrohre (3) auszuleiten, und
- Mittel, um eine Schicht von Frischwasser (9) auf das Gemisch (7) zu leiten,
**dadurch gekennzeichnet, dass** die Mittel (4-6) zum Erzeugen eines Vakuums in jedem Auslassrohr (3) weiter einen Drucktank (4) umfassen, welcher mit einem Auslassrohr (3) verbunden ist, sowie einem Vakuumtank (5), der mit dem Drucktank (4) derart verbunden ist, um ein Vakuum darin zu erzeugen, wobei der Drucktank in dem Behälter angeordnet ist.

2. Saugbagger nach Anspruch 1, wobei der Behälter (1) eine wannenförmige, sich verjüngende Basis (2) mit Auslassrohren (3) in unterschiedlichen Höhen aufweist.

3. Saugbagger nach Anspruch 1 oder 2, wobei mindestens eines der Auslassrohre (3) mit einem Salzmesser versehen ist.

## Revendications

1. Trémie d'aspiration comprenant une installation de dessalage d'un mélange (7) constitué de sable et d'eau salée ou de sable et d'eau saumâtre, ladite trémie d'aspiration comprenant en outre :
- un container (1) avec au moins un tuyau de décharge perforé (3) situé près de la base (2) de celui-ci,
- des moyens (4-6) pour décharger l'eau en générant un vide dans chaque tuyau de décharge (3), lesdits moyens comprenant une pompe de décharge (6) pour décharger l'eau de chacun desdits tuyaux de décharge (3), et
- des moyens pour ajouter une couche d'eau fraîche (9) sur le mélange (7),
**caractérisée en ce que** les moyens (4-6) pour générer un vide dans chaque tuyau de décharge (3) comprennent en outre un réservoir de pression (4) qui est relié à un tuyau de décharge (3), ainsi qu'un réservoir de vide (5) qui est relié au réservoir de pression (4), afin de générer un vide dans celui-ci, le réservoir de pression étant dans le container.

2. Trémie d'aspiration selon la revendication 1, dans laquelle le container (1) a une base en forme de cuve en pointe avec des tuyaux de décharge (3) à différentes hauteurs.

3. Trémie d'aspiration selon la revendication 1 ou 2, dans laquelle au moins un des tuyaux de décharge (3) est pourvu d'un salinomètre.
